# EUROPÄISCHE PATENTSCHRIFT

(11) **EP 0 738 570 B1**
(45) Veröffentlichungstag und Bekanntmachung des Hinweises auf die Patenterteilung: **18.10.2000**
(21) Anmeldenummer: 96106000.1
(22) Anmeldetag: 17.04.1996
(51) Int. Cl.: B27M 3/00

(54) **Verfahren zum Verbinden von Holzteilen**
Process for assembly of wooden parts
Procédé d'assemblage d'éléments de bois

(30) Priorität: 20.04.1995 EP 95105920
(43) Veröffentlichungstag der Anmeldung: 23.10.1996
(73) Patentinhaber: Fentech AG, CH-6301 Zug (CH)
(72) Erfinder: Frei, Urs, 8047 Zürich (CH); Knechtli, Thomas, 5105 Auenstein (CH)
(74) Vertreter: Wagner, Wolfgang, Dr. Phil., Dipl.-Phys.

(56) Entgegenhaltungen:
- EP-A- 0 571 321
- DE-A- 3 432 654
- DE-A- 4 121 812
- DE-A- 4 137 248
- FR-A- 2 640 311
- US-A- 5 133 822
- PATENT ABSTRACTS OF JAPAN vol. 9, no. 260 (C-309), 17.Oktober 1985 & JP-A-60 112872 (MASAYOSHI HIROTA), 19.Juni 1985,
- PATENT ABSTRACTS OF JAPAN vol. 16, no. 477 (M-1320), 5.Oktober 1992 & JP-A-04 173101 (MASATO ET AL), 19.Juni 1992,

## Beschreibung

Die Erfindung betrifft ein Verfahren zum Verbinden von Holzteilen gemäss dem Oberbegriff des Anspruchs 1. Derartige Verfahren werden auf vielen Gebieten angewandt, insbesondere bei der Herstellung von Flügel- oder Blendrahmen für Fenster und Glastüren oder von Jalousienläden aus Rahmenteilen und allfälligen weiteren Teilen sowie von Bauteilen für Holzfassaden und Wintergärten aus kleineren Einzelteilen.

Herkömmlich werden etwa zur Herstellung eines Flügelrahmens vier Rahmenteile im wesentlichen fertigbearbeitet, dann verleimt, d. h. die Kontaktflächen mit Leim bestrichen, verpresst und anschliessend ausgetretener Leim abgeputzt und der Rahmen nach abschliessender Bearbeitung der Aussenseite lackiert. Dabei werden gewöhnlich eine Grundierung, ein Vorlack und schliesslich ein Decklack aufgebracht. Dieses Vorgehen ist verhältnismässig aufwendig. Die Rahmen müssen im Ganzen lackiert werden, was entsprechend dimensionierte Anlagen erfordert.

Aus dem nächstliegenden Stand der Technik gemäß Patent Abstracts of Japan 9/260 (C-309) und JP-A-112 872/85 ist es bekannt, dem Leim Decklack beizumischen. Damit soll das Abputzen von Leim nach dem Verkleben nicht erforderlich sein. Die Mischung wird jedoch ausschliesslich auf die Kontaktflächen aufgebracht, die Lackierung erfolgt nach dem Verkleben.

Der DE-A-41 37 248 ist eine Kartonschachtel zu entnehmen mit einer Schale, die an ihrer Aussenseite mit einem Polymer-Dispersionslack überzogen ist. Ihr Boden wird mit einem unlackierten Karton verbunden, indem er an denselben angepresst und die Lackschicht durch ein elektrisches Wechselfeld über den Schmelzpunkt erhitzt wird. Der Lack muss hier nach dem Zusammenfügen der Teile aufgeweicht werden, was nur unter besonderen Voraussetzungen, insbesondere geeigneter Geometrie der Teile möglich ist.

Die der Erfindung zugrundeliegende Aufgabe liegt in erster Linie darin, ein Verfahren anzugeben, das sich auch zur Verbindung massiver Holzteile eignet und einfacher, schneller und mit einfacheren Mitteln als bekannte derartige Verfahren ausführbar ist.

Diese Aufgabe wird durch die im Anspruch 1 gegebene Lehre gelöst. Im Rahmen des erfindungsgemässen Verfahrens können die zu verbindenden Holzteile, also etwa die Rahmenteile eines Fensterflügels, vollständig fertiggestellt werden, so dass keine Nachbearbeitung des Rahmens erforderlich ist, dann fertiglackiert, d. h. mit Grundierung, eventuell Vorlack und Decklack versehen und schliesslich verbunden. Der Decklack übernimmt dabei die Rolle des Bindemittels und ersetzt den beim herkömmlichen Verfahren verwendeten Leim.

Durch die Erfindung wird die Herstellung von Rahmen und anderen aus Holzteilen zusammengesetzten lackierten Bauteilen wesentlich vereinfacht und verkürzt. Das Bestreichen der Kontaktflächen mit Leim und das Abputzen von aus den Fugen getretenem Leim nach dem Verpressen entfällt. Bearbeitungsvorgänge und Aufbringen der Lackschichten können vollautomatisiert werden. Die zu lackierenden Teile sind kleiner und leichter und daher leichter handhabbar, da ein Lackieren des zusammengesetzten Bauteils nicht erforderlich ist.

Zudem hat sich herausgestellt, dass bei gemäss dem erfindungsgemässen Verfahren hergestellten Bauteilen die Fugenzonen nicht kritisch sind, sondern ebenso resistent wie die übrigen Bereiche, während die Lebensdauer herkömmlich hergestellter Bauteile gewöhnlich dadurch begrenzt ist, dass zuerst an den Fugen an der Aussenseite Schäden entstehen, da dort Wasser eindringt und Pilz- oder Insektenbefall ermöglicht. Die Lebensdauer der Bauteile erhöht sich daher, ausserdem kann auf umweltschädliche Zusatzstoffe im Decklack wie Fungizide und Insektizide verzichtet werden.

Im folgenden wird die Erfindung anhand von Figuren, welche lediglich ein Ausführungsbeispiel darstellen, näher erläutert. Es zeigen
- Fig. 1: das Zusammensetzen von Rahmenteilen eines Flügelrahmens für ein Fenster von der Fensteraussenseite,
- Fig. 2: eine Eckverbindung der Rahmenteile des Flügelrahmens gemäss Fig. 1 von der Fensteraussenseite und
- Fig. 3: das Verpressen der Eckverbindungen des Flügelrahmens gemäss Fig. 1, 2 von der Fensterinnenseite.

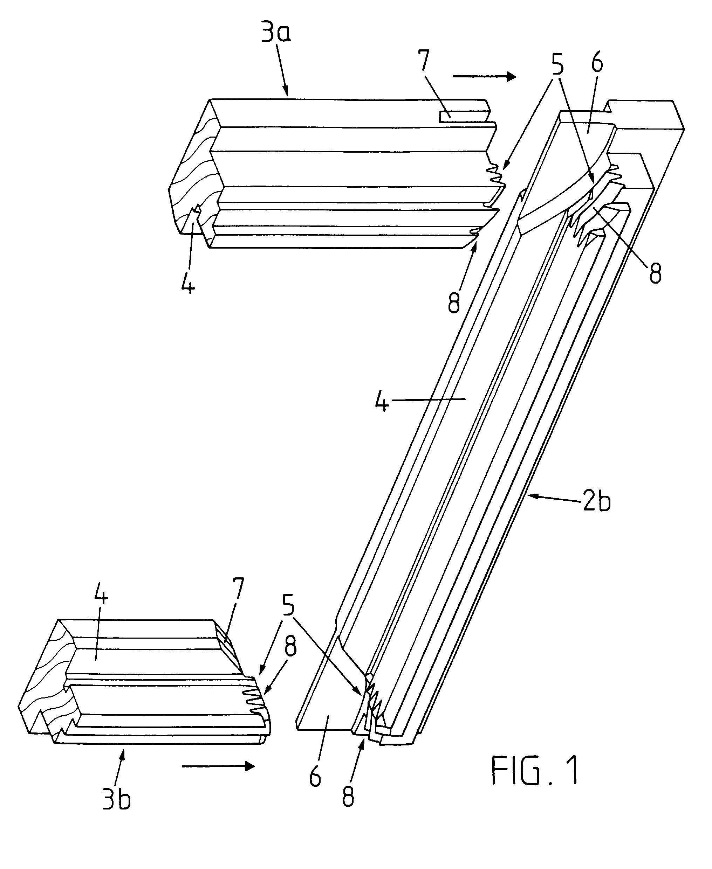

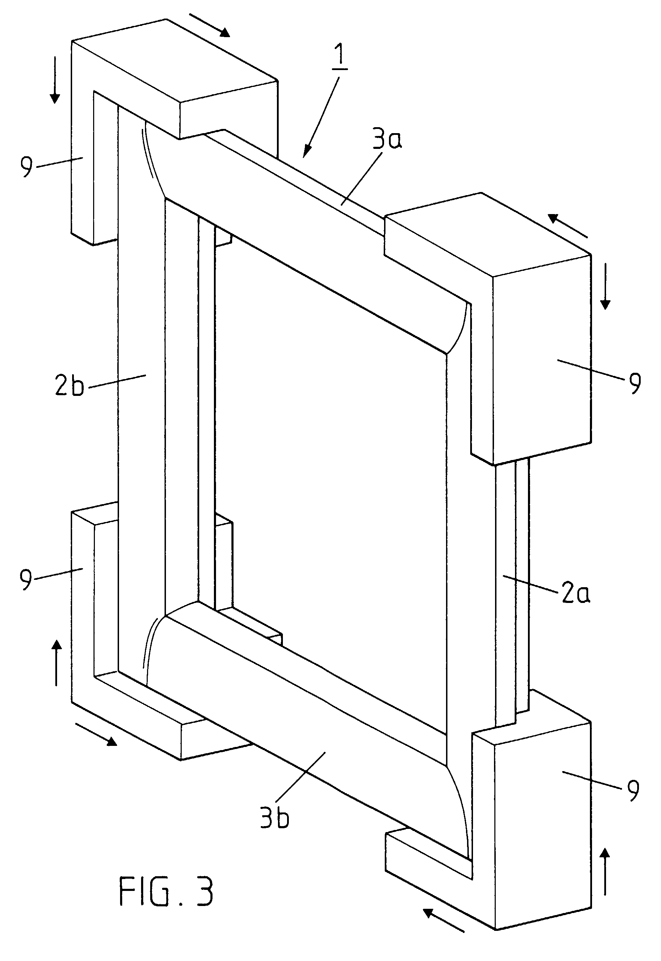

5 Bei der beispielsweise dargestellten Herstellung eines Flügelrahmens 1 (Fig. 3) für ein Fenster werden senkrechte Rahmenteile 2a,b und waagrechte Rahmenteile 3a,b miteinander zum Flügelrahmen 1 verbunden. Die Rahmenteile 2a,b und 3a,b sind (Fig. 1) an der Rahmeninnenseite mit Fälzen 4 versehen. An den Stirnseiten sind sie mit Kontaktflächen 5 versehen, wobei zusammenwirkende Kontaktflächen jeweils kongruent sind. Die Kontaktflächen 5 weisen jeweils im Bereich des Falzes 4 einen mindestens annähernd in Gehrung verlaufenden Abschnitt auf, welcher tangential an einen bogenförmigen Abschnitt im Aussenbereich anschliesst. Letzterer ist bei den senkrechten Rahmenteilen 2a,b konkav und bei den waagrechten Rahmenteilen 3a,b entsprechend konvex. Im Bereich des Falzes weist die Kontaktfläche 5 bei den senkrechten Rahmenteilen 2a,b jeweils einen Zapfen 6 auf, der in einen entsprechenden Schlitz 7 im waagrechten Rahmenteil 3a oder 3b eingreift. Im zur Fensteraussenseite hin anschliessenden Bereich weisen die Kontaktflächen 5 jeweils eine Keilverzinkung 8 auf. Weitere günstige Ausbildungen von Kontaktflächen sind in der EP-A-0 571 321 beschrieben.

Zur Herstellung des Flügelrahmens 1 werden zuerst die senkrechten Rahmenteile 2a,b und die waagrechten Rahmenteile 3a,b aus Kanteln abgelängt, die Innen- und Aussenprofile gekehlt, die Kontaktflächen 5 gefräst und die erforderlichen Bohrungen angebracht. Haben sie so ihre endgültige Form erreicht, werden sie vollständig lackiert, d. h. es wird erst auf ihre gesamte Oberfläche eine Grundierung aufgebracht, dann eventuell ein Vorlack und schliesslich ein Decklack. Das Aufbringen der Lackschichten erfolgt vorzugsweise durch Spritzen, jedoch ist auch Fluten, Tauchen oder Aufbringen im Vakuumverfahren möglich. Anschliessend lässt man die Rahmenteile 2a,b, 3a,b trocknen, bis der Decklack mindestens griffest ist. Er kann jedoch auch voll aushärten, d. h. die Trocknungzeit ist nach oben nicht beschränkt.

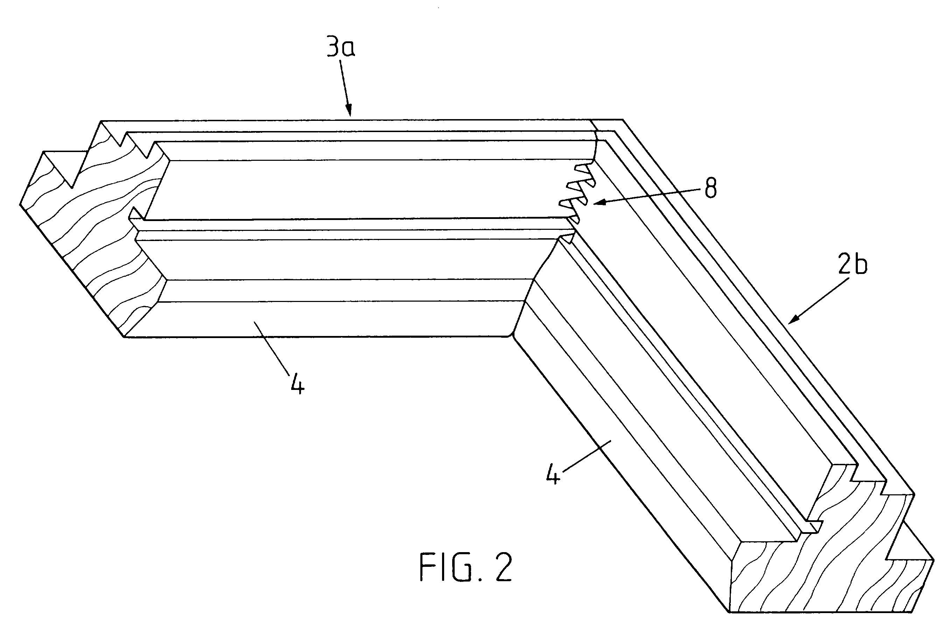

Als Vorbereitung zur Herstellung der Eckverbindungen werden die Enden der Rahmenteile 2a,b, 3a,b in ein Lösungsmittel getaucht und dadurch der Decklack an der Oberfläche angelöst. Dabei wird die beim Trocknen eingetretene Aushärtung mindestens oberflächlich rückgängig gemacht. Dann werden die Rahmenteile 2a,b, 3a,b wie in Fig. 1 angedeutet zusammengesteckt - eine Eckverbindung ist in Fig. 2 dargestellt - und bei nicht vollständig gehärtetem Lack mittels an den Ecken aufgesetzter Druckschuhe 9 verpresst (Fig. 3). Ein Druckschuh 9 wird dabei jeweils gegen zwei benachbarte Druckschuhe 9 gepresst.

Nach einer Haltezeit werden die Druckschuhe 9 entfernt. Während einer Trockenzeit von gewöhnlich einigen Tagen erreicht die Verbindung durch Verdunsten des Lösungsmittels ihre volle Stärke. Nach Montage allfälliger Armaturen ist der Rahmen einsatzbereit. Weitere Oberflächenbehandlung ist nicht erforderlich.

Besonders bewährt haben sich im Rahmen des erfindungsgemässen Verfahrens Acryldecklacke, wobei Lösungsmittel auf der Basis von Aceton, Aethylacetat, Buthylacetat oder Methylethylketon zum Anlösen des Decklacks im Bereich der Kontaktflächen eingesetzt wurde. Im Sinne einer Verringerung der Anforderungen bezüglich der Fertigungstoleranzen der Rahmenteile hat es sich ausserdem als günstig erwiesen, dem Lösungsmittel Bindemittel, insbesondere dem im Decklack bereits enthaltenen entsprechendes Bindemittel, zuzumischen.

Bei Verwendung von Wasserlacken wie den erwähnten Acryldecklacken kommt in diesem Fall als Lösungsmittel vor allem Aceton in Frage. Die Lösungsmittelmischung kann im wesentlichen aus 33-70% Lösungsmittel, 15-33% Bindemittel und im übrigen aus Wasser bestehen. Vorzugsweise liegt das Mischungsverhältnis bei etwa 50:25:25. Als besonders günstig hat es sich erwiesen, 33-70%, vorzugsweise etwa 50% Lösungsmittel mit Decklack zu mischen, der ja im wesentlichen etwa hälftig aus Bindemittel und Wasser zusammengesetzt ist.

So wurde nach Grundierung der Rahmenteile 2a,b, 3a,b mit Sigmalith Acryl Dipprimer als Decklack Sigmalith Acryl Semi-Gloss, beide von der Firma Sigma Coatings BV, Postfach 42, 1420 AA Uithorn, Niederlande, aufgebracht und nach einer Trockenzeit von ca. 15 Stunden - 2-3 Stunden wären prinzipiell ausreichend, da dann Griffestigkeit erreicht ist - die Kontaktflächen 5 für 12 sec in eine zu je 50% aus Aceton und Decklack bestehende Lösungsmittelmischung getaucht und nach einer Wartezeit von 1 min während 2 min mit einem Druck von 2N/mm² verpresst. Die Eckverbindung hatte von Holz zu Holz 100 µm Luft. Die Dicke der Decklackschicht betrug jeweils 80 µm. Die Verbindung erreichte nach ca. 8 Tagen ihre volle Festigkeit und bereits nach 2 Tagen 90% derselben.

Ausser Acryllacken oder anderen Wasserlacken kommen z. B. NC-Lacke oder Kunstharzlacke für das erfindungsgemässe Verfahren in Frage. Wichtig ist, dass die Aushärtung des Lacks etwa durch ein geeignetes, auf ihn abgestimmtes Lösungsmittel mindestens teilweise rückgängig gemacht werden kann, so dass durch Verpressen allein eine haltbare Verbindung der lackierten Rahmenteile 2a,b, 3a,b herstellbar ist.

Als Alternative zu diesem Kaltschweissen - dem Anlösen durch ein Lösungsmittel - kann geeigneter Decklack durch lokale Erwärmung im Bereich der Kontaktflächen 5 angeschmolzen und auf diese Weise die Aushärtung rückgängig gemacht werden. Das Anschmelzen kann beispielsweise mittels eines Infrarotstrahlers erfolgen.

Schliesslich ist es auch möglich, den Decklack von vornherein nicht voll aushärten, sondern ihn nur gerade griffest werden zu lassen, so dass die Rahmenteile 2a,b, 3a,b problemlos handhabbar sind. Dies hat zwar den Vorteil, dass ein Arbeitsgang wegfällt und auch Lacke verwendbar sind, bei denen die Aushärtung irreversibel ist, führt jedoch zu einschneidenderen logistischen Randbedingungen, da dann die Wartezeit zwischen Lackieren und Verpressen in einem verhältnismässig engen Bereich liegen muss, was bei einem Rückgängigmachen der Aushärtung durch Anlösen oder Anwärmen des Decklacks nicht nötig ist.

Die Erfindung wurde zwar am Beispiel eines Flügelrahmens für ein Fenster erläutert, es liegt jedoch auf der Hand, dass die Anwendungsmöglichkeiten weit darüber hinausgehen. Prinzipiell ist es überall dort vorteilhaft einsetzbar, wo lackierte Bauteile hergestellt werden, die aus mehreren miteinander verbundenen Holzteilen zusammengesetzt sind wie z. B. die eingangs erwähnten Rahmen für Glastüren,

Jalousienläden und Bauteile für Holzfassaden und Wintergärten, aber auch Möbel etc.. Das erfindungsgemässe Verfahren ist natürlich auch in Fällen anwendbar, wo die zu verbindenden Teile nicht ganzflächig lackiert werden müssen, sondern nur jeweils ein an die Kontaktfläche anschliessender Teil ihrer Oberflächen - welche dann beim fertigen Bauteil beidseits an die Fuge anschliessen - mit Lack bedeckt sein muss.

Dem Einsatz zusätzlicher mechanischer Verbindungsmittel wie Dübel, welche z. B. von einer Kontaktfläche ringartig umgeben sind, steht ebenfalls nichts im Wege.

## Patentansprüche

1. Verfahren zum Verbinden eines ersten Holzteils mit einem zweiten Holzteil, bei welchem zwischen eine Kontaktfläche (5) des ersten Holzteils und eine zu derselben im wesentlichen kongruenten Kontaktfläche (5) des zweiten Holzteils ein Verbindungsmittel gebracht und die Kontaktflächen (5) miteinander verpresst werden, **dadurch gekennzeichnet, dass** vor dem Verpressen auf die jeweilige Kontaktfläche (5) sowie mindestens einen an sie anschliessenden Teil der Oberfläche jedes Holzteils Decklack aufgebracht wird und das Verpressen bei nicht voll gehärtetem Decklack durchgeführt wird.

2. Verfahren nach Anspruch 1, **dadurch gekennzeichnet, dass** das Verpressen nach Trocknung des Decklacks mindestens bis zur Griffestigkeit und Aufweichung desselben durch geeignete Oberflächenbehandlung der Holzteile im Bereich der Kontaktflächen (5) durchgeführt wird.

3. Verfahren nach Anspruch 2, **dadurch gekennzeichnet, dass** die Aufweichung des Decklacks durch Aufbringen eines Lösungsmittels bewerkstelligt wird.

4. Verfahren nach Anspruch 3, **dadurch gekennzeichnet, dass** das Lösungsmittel mindestens einen der folgenden Stoffe enthält: Aceton, Aethylacetat, Buthylacetat, Methylethylketon.

5. Verfahren nach Anspruch 3 oder 4, **dadurch gekennzeichnet, dass** dem Lösungsmittel Bindemittel zugemischt ist.

6. Verfahren nach Anspruch 5, **dadurch gekennzeichnet, dass** das Bindemittel dem im Decklack enthaltenen entspricht.

7. Verfahren nach Anspruch 5 oder 6, **dadurch gekennzeichnet, dass** dem Lösungsmittel Decklack zugemischt ist.

8. Verfahren nach einem der Ansprüche 5 bis 7, **dadurch gekennzeichnet, dass** die Zumischung insgesamt zwischen 30 und 67% beträgt.

9. Verfahren nach Anspruch 2, **dadurch gekennzeichnet, dass** die Aufweichung des Decklacks durch Erwärmen mittels Infrarotstrahlung bewerkstelligt wird.

10. Verfahren nach einem der Ansprüche 1 bis 9, **dadurch gekennzeichnet, dass** der Decklack jeweils auf die gesamte Oberfläche jedes der Holzteile aufgebracht wird.

11. Verfahren nach einem der Ansprüche 1 bis 10, **dadurch gekennzeichnet, dass** vor dem Aufbringen des Decklacks mindestens eine Grundierung aufgebracht wird.

12. Verfahren nach einem der Ansprüche 1 bis 11, **dadurch gekennzeichnet, dass** der Decklack durch Spritzen aufgebracht wird.

13. Verfahren nach einem der Ansprüche 1 bis 12, **dadurch gekennzeichnet, dass** es sich beim Decklack um einen Acryllack handelt.

14. Verfahren nach einem der Ansprüche 1 bis 13, **dadurch gekennzeichnet, dass** die Kontaktflächen (5) jeweils mit einer Keilverzinkung versehen sind.

15. Verfahren nach einem der Ansprüche 1 bis 14, **dadurch gekennzeichnet, dass** die Kontaktflächen (5) jeweils einen Zapfen (6) bzw. einen Schlitz (7) aufweisen.

16. Verfahren nach einem der Ansprüche 1 bis 15, **dadurch gekennzeichnet, dass** es sich bei den Holzteilen um Rahmenteile (2a, 2b, 3a, 3b) oder andere Teile eines Fensterrahmens, eines Rahmens für eine Glastüre oder eines Jalousieladens handelt.

17. Verfahren nach Anspruch 16, **dadurch gekennzeichnet, dass** die Rahmenteile (2a, 2b, 3a, 3b) jeweils an der Innenseite einen Falz (4) aufweisen und mindestens ein im Bereich desselben liegender Abschnitt der Kontaktfläche (5) jeweils wenigstens annähernd in Gehrung verläuft, während aussen ein bogenförmiger Abschnitt anschliesst.

## Claims

1. Method for connecting a first wood part to a second wood part, in which a connecting means is introduced between a contact surface (5) of the first wood part and a contact surface (5) of the second wood part, which contact surface is essentially congruent with said contact surface of the first wood part, and the contact surfaces (5) are pressed together,
**characterized in that,** before the pressing, the top coat is applied to the respective contact surface (5) and at least that part of the surface of each wood part which is adjacent to said contact surface and the pressing is carried out when the top coat has not completely hardened.

2. Method according to Claim 1, **characterized in that** the pressing is carried out after drying of the top coat at least until it is firm to the touch and softening of said top coat by suitable surface treatment of the wood parts in the region of the contact surfaces (5).

3. Method according to Claim 2, **characterized in that** the softening of the top coat is effected by applying a solvent.

4. Method according to Claim 3, **characterized in that** the solvent contains at least one of the following substances: acetone, ethyl acetate, butyl acetate, methyl ethyl ketone.

5. Method according to Claim 3 or 4, **characterized in that** binder is mixed with the solvent.

6. Method according to Claim 5, **characterized in that** the binder corresponds to that contained in the top coat.

7. Method according to Claim 5 or 6, **characterized in that** top coat is mixed with the solvent.

8. Method according to any of Claims 5 to 7, **characterized in that** the admixing amounts to between 30 and 67% altogether.

9. Method according to Claim 2, **characterized in that** the softening of the top coat is effected by heating by means of infrared radiation.

10. Method according to any of Claims 1 to 9, **characterized in that** the top coat is applied in each case to the total surface of each of the wood parts.

11. Method according to any of Claims 1 to 10,
**characterized in that** at least one primer is applied prior to application of the top coat.

12. Method according to any of Claims 1 to 11,
**characterized in that** the top coat is applied by spraying.

13. Method according to any of Claims 1 to 12,
**characterized in that** the top coat is an acrylic lacquer.

14. Method according to any of Claims 1 to 13,
**characterized in that** the contact surfaces (5) are each provided with finger jointing.

15. Method according to any of Claims 1 to 14,
**characterized in that** the contact surfaces (5) each have a tenon (6) or a mortice (7).

16. Method according to any of Claims 1 to 15,
**characterized in that** the wood parts are frame parts (2a, 2b, 3a, 3b) or other parts of a window frame, of a frame for a glass door or of a slatted shutter.

17. Method according to Claim 16, **characterized in that** the frame parts (2a, 2b, 3a, 3b) each have a rabbet (4) on the inside and at least one section of the contact surface (5) which is located in the region of said rabbet is in each case at least approximately mitred while being adjacent to an arc-shaped section on the outside.

## Revendications

1. Procédé de liaison d'une première pièce en bois à une deuxième pièce en bois, pour lequel un moyen de liaison est placé, entre une surface de contact (5) de la première pièce en bois et une surface de contact (6), sensiblement congruente à celle-ci, de la deuxième pièce en bois, et les surfaces de contact (5) étant pressées ensemble, **caractérisé en ce qu'**avant l'opération de pressage sur la surface de contact (5) respective, ainsi qu'au moins une partie, se raccordant à celle-ci, de la surface de chaque pièce en bois, est appliqué un vernis de couverture et le pressage étant effectué lorsque le vernis de couverture n'est pas complètement durci.

2. Procédé selon la revendication 1, **caractérisé en ce que** l'opération de pressage est effectuée après séchage du vernis de couverture, au moins jusqu'à atteinte de la manipulabilité, et après amollissement de celui-ci, par un traitement de surface approprié des pièces en bois, dans la zone des surfaces de contact (5).

3. Procédé selon la revendication 2, **caractérisé en ce que** l'amollissement du vernis de couverture est provoqué par application d'un solvant.

4. Procédé selon la revendication 3, **caractérisé en ce que** le solvant contient au moins l'une des substances suivantes : acétone, éthylacétate, butylacétate, méthyléthylcétone.

5. Procédé selon la revendication 3 ou 4, **caractérisé en ce qu'**on ajoute en mélange un liant au solvant.

6. Procédé selon la revendication 5, **caractérisé en ce que** le liant correspond à celui contenu dans le vernis de couverture.

7. Procédé selon la revendication 5 ou 6, **caractérisé en ce qu'**on ajoute en mélange du vernis de couverture au liant.

8. Procédé selon l'une des revendications 5 à 7, **caractérisé en ce que** l'addition par mélange est faite en une proportion globale comprise entre 30 et 67 %.

9. Procédé selon la revendication 2, **caractérisé en ce que** l'amollissement du vernis de couverture est provoqué par chauffage à l'aide d'un rayonnement infrarouge.

10. Procédé selon l'une des revendications 1 à 9, **caractérisé en ce que** le vernis de couverture est appliqué chaque fois sur la surface totale de chacune des pièces en bois.

11. Procédé selon l'une des revendications 1 à 10, **caractérisé en ce qu'**avant l'application du vernis de couverture, on applique au moins un produit d'apprêt.

12. Procédé selon l'une des revendications 1 à 11, **caractérisé en ce que** le vernis de couverture est appliqué par pulvérisation.

13. Procédé selon l'une des revendications 1 à 12, **caractérisé en ce qu'**il s'agit, concernant le vernis de couverture, d'un vernis acrylique.

14. Procédé selon l'une des revendications 1 à 13, **caractérisé en ce que** les surfaces de contact (5) sont chacune dotées d'un aboutage.

15. Procédé selon l'une des revendications 1 à 14, **caractérisé en ce que** les surfaces de contact (5) présentent chacune un tenon (6) et/ou une fente (7).

16. Procédé selon l'une des revendications 1 à 15, **caractérisé en ce que**, concernant les pièces en bois, il s'agit de parties de cadre (2a, 2b, 3a, 3b) ou d'autres parties d'un cadre de fenêtre, d'un cadre destiné à une porte vitrée ou d'un battant ou volet à persienne.

17. Procédé selon la revendication 16, **caractérisé en ce que** les parties de cadre (2a, 2b, 3a, 3b) présentent chacune du côté intérieur une feuillure (4) et qu'au moins un tronçon, situé dans la zone de celle-ci, de la surface de contact (5) s'étend chaque fois au moins à peu près en onglet, tandis qu'extérieurement se raccorde un tronçon à forme arquée.
